# EUROPEAN PATENT APPLICATION

(11) **EP 0 960 650 A1**
(43) Date of publication of application: **01.12.1999**
(21) Application number: 99109446.7
(22) Date of filing: 11.05.1999
(51) Int. Cl.: B01F 3/02, B01F 5/02, F01N 3/20, B01D 53/86, B01F 5/06

(54) **Mixing device**

(30) Priority: 11.05.1998 US 84927 P
(71) Applicant: Haldor Topsoe A/S, DK-2800 Lyngby (DK)
(72) Inventor: Fridericksen, Sven, 2100 Copenhagen Ö (DK)
(74) Representative: Grünecker, Kinkeldey, Stockmair & Schwanhäusser Anwaltssozietät

(57) **Abstract**

Mixing device for mixing of a first and second gas stream comprising within a housing at least one deflection body causing the gas streams to be deflected within the housing and a first nozzle device having at least one nozzle for introduction of the second gas stream, said at least one nozzle located displaced from a central axis of said housing.

## Description

The present invention relates to the mixing of fluida and, in particular, to a mixing device with a deflection body for the mixing of two fluid streams.

It has now been found that when deflecting a gas stream of different gases, the gases are mixed thoroughly, in particular, radial diffusers provide even mixing of gas streams as described in DK Patent No. 169,823 and PCT/DK/9500200.

The mixing device of the invention is intended to completely or partly replace the conventional class of static mixer devices in which mixing is associated with a strongly disordered flow and big eddies, e.g. created by helical elements. Although such devices can be made very effective, they create a substantial pressure loss.

In overcoming these problems, the present invention provides a mixing device having features as defined in claims 1 or 2. The invention relies on the basic idea that when combining, e.g. a DENOX catalytic treatment of an off-gas with a silencer, high flow velocities and flow deflections inside and/or associated with pipes or channels of a silencing device can be utilized for combined silencing and mixing. Even if such pipes, channels or associated flow elements may cause substantial pressure losses, the overall pressure loss management can become much more efficient. In addition, the total space requirement may be smaller. Sometimes the invention can make both a conventional mixer and a separate silencer unnecessary.

The mixing device according to the invention is, in particular, useful when installed in flue or waste gas channels provided with a catalytic compartment for the treatment of off-gases, wherein a reactant gas or a spray of reactive particles in liquid or solid phase is admixed with the off-gas for the catalytic treatment of the gas. In those applications, the combined silencing and mixing effect of the mixing device advantageously reduces the overall dimensions of the channels and pressure drop of the gas, when compared to channels with separate silencing and mixing equipment. Accordingly, the invention further provides an off-gas channel comprising one or more catalyst beds for the catalytic treatment of off-gas in presence of a reactant gas, wherein the off-gas channel further comprises a mixing device of the above-described type for the silencing and mixing of the off-gas and the reactant gas prior to introduction into the catalyst bed.

In the following description, specific embodiments of the invention are described in further detail with reference to the drawings in which:
Figure 1 shows an elevational, partially cross-sectional view of a first embodiment of a mixing device with radial diffuser elements arranged in series;
Figure 2 shows an elevational, cross-sectional view of a second embodiment of a mixing device according to the present invention;
Figure 3 shows an elevational, cross-sectional view of a third embodiment of the present invention; and
Figure 4 shows an elevational, cross-sectional view of a fourth embodiment of the present invention.

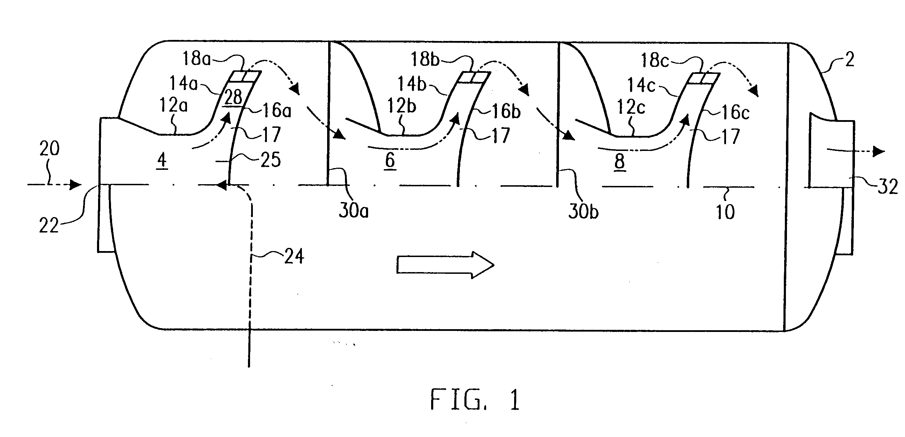

In Figure 1, the mixing device comprises within cylindrical housing 2 three radial diffuser elements 4, 6, 8 arranged in series along axis 10 within housing 2. The diffuser elements are preferably rotationally symmetric, with respect to longitudinal axis 10 of said housing.

Radial diffuser elements 4, 6, 8 consist each of a cylindrical inlet end 12a, 12b, and 12c, respectively, connected to curved guide baffle 14a, 14b, 14c and a curved stagnation baffle 16a, 16b, 16c, which causes partial flow stagnation of a gas stream and leads the gas stream radially to outlet ends 18a, 18b and 18c as indicated by arrows.

An incoming off-gas stream 20 is introduced in the mixing device through inlet 22 in housing 2 and passed to the inlet of the first radial diffuser 4.

Prior to radial diffusion of the gas stream, the stream is admixed with a reactant gas from tube 24.

Reactant gas 24 is introduced into gas stream 20 through nozzle 26 arranged centrally on stagnation baffle 14a. Instead of, or in addition to a nozzle 26 located centrally on stagnation baffle, one or more nozzles (not shown in drawings) are located on stagnation baffle and/or guide baffle at a position offset from the central axis 10. Use of a plurality of decentrally arranged nozzles, preferably on stagnation baffles, additionally improves gas mixing properties. The mixed gas stream is then passed radially through conduct 28 between guide baffle 14a and stagnation baffle 16a to outlet ends 18a. The mixed gas stream is further sequentially introduced into diffuser elements 6 and 8. Diffuser elements 6 and 8 are each provided with a gas collector 30a and 30b connected to inlet 12b and 12c for collecting the gas stream leaving the diffuser 4 and 6, respectively. By passage through the above-described mixing device, the reactant gas is mixed thoroughly with the off-gas stream and withdrawn as a homogeneous gas stream at outlet end 32 of the mixing device.

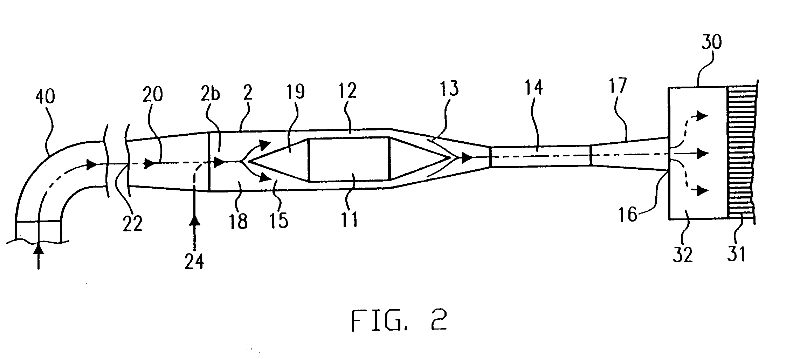

In Figure 2, parts which are the like to parts of Figure 1 with respect to form and/or function, are designated with the same reference numeral as in Figure 1. A new description of these parts is redundant and is, therefore, omitted.

Figure 2 shows a second embodiment of the invention. Here, the mixing device contains a central deflection body 11 within housing 2, causing a second nozzle flow, in addition to the nozzle 26 used for introduction of reactant gas. At the front end of this body, the gas streams in part 15 are forced to flow radially outwardly into annular duct 12. Thereafter, in transition flow element 13, the gas streams are deflected inwardly, so that they leave housing 2 by pipe or duct 14 in which the flow fills out the entire cross-section once again, At flow enlargement 16, the now substantially or fully mixed streams enter housing 30, which contains a monolith 31.

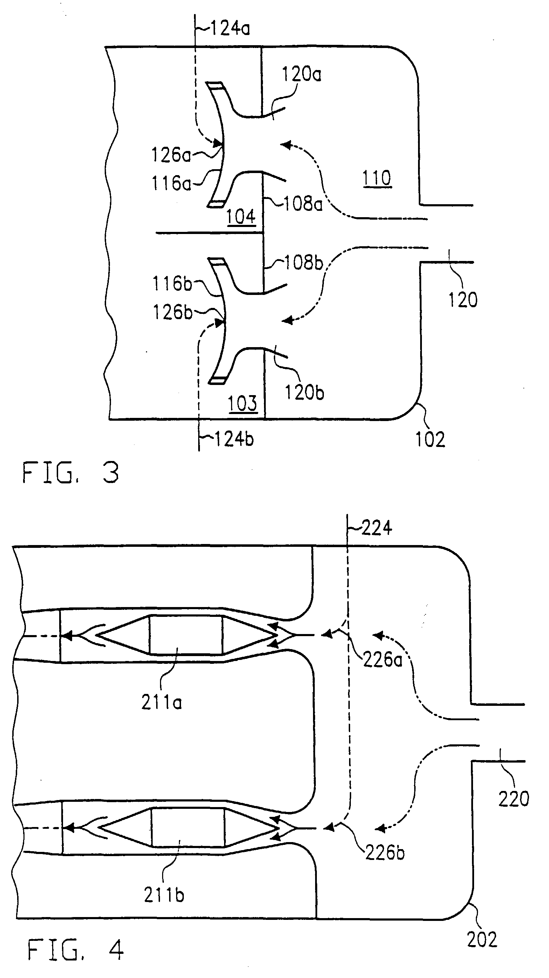

In Figure 3, a sectional view of a third embodiment of the present invention is shown. A housing 102 contains a parallel arrangement of diffuser elements 103 and 104. The diffuser elements 103 and 104 are separated by a guiding surface 106 and are enclosed by a separation wall 108a and 108b, forming a first chamber 110 together with the housing 102 at the side of the off-gas inlet 120. In chamber 110, inlet nozzles 120a and 120b of the two radial diffusers are projecting. Stagnation baffles 116a and 116b of the two radial diffusers are connected with gas lines 124a and 124b, respectively, having gas nozzles 126a and 126b for the reactant gas, respectively, on a position centrally located on the respective stagnation baffle. The two radial diffusers 103 and 104 located parallel within the housing 102 of the mixing device and each having an inlet portion projecting into chamber 110 divide the gas stream into two partial gas streams, flowing respectively through each of the radial diffusers. Each of the radial diffusers 103 and 104 may be followed by one or more further radial diffusers which may be arranged in parallel or serially with respect to the gas stream passing through the preceding radial diffuser.

Further, there may be created a plurality of diffuser stages within housing 102, each stage containing one radial diffuser or a plurality of diffusers either arranged serially or in parallel with respect to the gas stream processed therein. For serially arranged radial diffusers, only the first one in fluid flow direction is preferably provided with the first nozzle device for introducing the reactant gas. For radial diffusers arranged in parallel, preferably all are arranged with a first nozzle device for introducing the reactant gas to be mixed with the processed gas stream.

For the radial diffusers, both types as shown in Figure 1 or Figure 2 can be applied.

A situation where the radial diffuser type shown in Figure 2 is used in a parallel arrangement is depicted in Figure 4. In Figure 4, the same reference numerals used in Figure 2, except for being increased by 200, are cited . Again, several stages of radial diffusers arranged in parallel and/or serially arranged radial diffusers may be combined within housing 202 of this embodiment.

## Claims

1. Mixing device for mixing of a first and second gas stream comprising within a housing at least one deflection body causing the gas streams to be deflected within the housing and a first nozzle device having at least one nozzle for introduction of the second gas stream, said at least one nozzle located displaced from a central axis of said housing.

2. Mixing device for mixing of a first and second gas stream comprising within a housing at least one deflection body causing the gas streams to be deflected within the housing and a first nozzle device having at least one nozzle for introduction of the second gas stream, wherein the at least one deflection body is adapted to cause the gas stream to enter a second nozzle in which the flow area diminishes in flow direction.

3. Mixing device according to claims 1 or 2, wherein the first nozzle device is arranged substantially rotational symmetric to the axis of the housing.

4. Mixing device according to claims 1, 2 or 3, wherein the deflection body is in form of a radial diffuser with a guide baffle and a juxtaposed stagnation baffle to radially deflect said gas stream.

5. Mixing device according to claim 4, wherein the at least one nozzle of the first nozzle is arranged at inlet of a diffuser.

6. Mixing device according to claims 4 or 5, wherein the first nozzle device comprises a nozzle arranged on axis of the stagnation baffle.

7. Mixing device according to any of claims 2 to 5, wherein said at least one nozzle is located displaced from a central axis of said housing.

8. Mixing device according to claim 4, wherein the diffuser is connected to a pipe or channel, the diffuser and the pipe or channel together communicating with both an upstream chamber and a downstream chamber.

9. Mixing device according to claim 2, wherein the second nozzle is connected to a pipe or channel, the second nozzle and the pipe or channel together communicating with both an upstream chamber and a downstream chamber.

10. Mixing device according to any of claims 1 to 9, wherein the housing is provided within a section of an off-gas channel.

11. Mixing device according to any of claims 1 to 10, comprising a plurality of deflection bodied located serially along a flow path of the gas stream.

12. Mixing device according to any of the claims 1 to 11, wherein a plurality of deflection bodies is arranged in parallel so as to divide the gas stream in a plurality of partial gas streams.

13. Mixing device according to claim 12, wherein the dividing of partial gas streams is assisted by guide surfaces substantially enclosing the deflection bodies for each of the respective partial gas streams.

14. Off-gas channel for the catalytic treatment of an off-gas being provided with at least mixing device according to any one of the preceding claims.
